# DEMANDE DE BREVET EUROPEEN

(11) **EP 1 068 826 A2**
(43) Date de publication de la demande: **17.01.2001**
(21) Numéro de dépôt: 99122463.5
(22) Date de dépôt: 11.11.1999
(51) Int. Cl.: A47J 42/40, A47J 31/40, A47J 42/00

(54) **Machine de distribution et confectionnement de café**

(30) Priorité: 13.07.1999 IT PN990057
(71) Demandeur: Rolland, Guy M., 44000 Nantes (FR)
(72) Inventeur: Rolland, Guy M., 44000 Nantes (FR)
(74) Mandataire: Dalla Rosa, Adriano

(57) **Abrégé**

Machine pour la distribution et le confectionnement de café, comprenant un récipiént (7) du café en grains et un moulin (38) pour le même café, dans laquelle le récipiént (7) est subdivisé dans une pluralité de chambres séparées (8,9), contenants respectivement du café en grains de types différents, et est joint dans la part inférieure (20) avec au moins un ultérieur récipiént (21) subdivisé en premières et deuxièmes parts de chambre (28,29;30,31), respectivement utilisées pour le dosage du café en grains et pour la mouture du même. Telles premières et deuxièmes parts de chambre (28,29;30,31) sont pourvues de rideaux mobiles (24,25,26,27) pour le dosage et la mouture du café en grains et d'un conduit de déchargement (41) du café moulu. Machine comprenant en outre une pluralité de sachets (42) dans lesquels le café moulu est introduit.

## Description

L'invention concerne une machine de distribution et confectionnement de café, façonnée pour permettre l'introduction du café en grains des types et quantités différents et par la suite la mouture de ce café en grains et son confectionnement dans des spécifiques sachets flexibles d'approprié matériel.

Actuellement, pour la préparation de boissons à base de café, éventuellement moulu avec du lait ou des autres composants, il est communément employé du café en grains des types différents, qui est moulu en forme de poudre et introduit dans les traditionnelles machines de préparation de café, ou du café prémoulu et confectionné en différents quantités dans des sachets flexibles opportunément scellés, qui sont vendus au public, et par la suite ouverts pour l'introduction de la poudre de café dans telles machines de préparation de café.

La présente invention se propose de rendre disponible le café de façon différente de celles décrites avant, au moyen d'une machine de distribution et confectionnement de café qui permet la sélection du type et de la quantité de café qui sont désirés et le confectionnement automatique du même dans de spécifiques sachets flexibles, pour la successive utilisation du même café dans les machines de préparation de café communément employées.

Cette machine de distribution et confectionnement automatique de café est réalisée avec les caractéristiques constructives essentiellement décrites, avec particulière référence aux jointes revendications du présent brevet.

L'invention sera mieux comprise par la suivante description, donnée seulement à titre d'example non limitatif et se référant aux dessins annexés, dans lequels :
- la fig. 1 montre une vue frontale schématique d'une machine de distribution et confectionnement de café suivant l'invention ;
- la fig. 2 montre une vue latérale schématique de la machine de la fig. 1.

Dans lesdites figures, une machine 5 de distribution et confectionnement automatique de café suivant l'invention est représentée, dans laquelle du café en grains des types et quantités différents, qui peuvent être sélectionnés par l'usager est introduit, et tel café en grains est automatiquement moulu et confectionné dans de sachets flexibles ou récipiénts pareils de matériel approprié, qui après leur remplissage sont scellés d'une manière adéquate et rendus disponibles pour l'utilisation.

Telle machine 5 comprend essentiellement une enveloppe 6 s'étendant verticalement, contenant au moins un récipiént 7 du café en grains, disposé dans la partie supérieure de la machine et ouvert dans la partie supérieure et inférieure, tel récipiént étant subdivisé en chambres séparées, dans le présent example constituées par les chambres 8 et 9, à travers de respectives cloisons (dans l'example représenté constituées par l'unique cloison 10), lesquelles chambres possèdent un volume adéquat pour contenir de quantités considérables des types différents de café en grains, qui est introduit dans les mêmes chambres à travers leur partie supérieure ouverte. Naturellement, le récipiént peut être subdivisé aussi dans un nombre différent des chambres séparées par rapport aux chambres qui viennent de être décrites. Advantageusement, le récipiént 7 est façonné en forme parallélépipède rétrécie vers le bas, dont les parois inférieures 11 sont inclinées vers le bas pour faciliter la chute de café en grains vers la partie inférieure du même récipiént, toutefois ce récipiént-ci peut être façonné aussi en formes différentes de celle décrite.

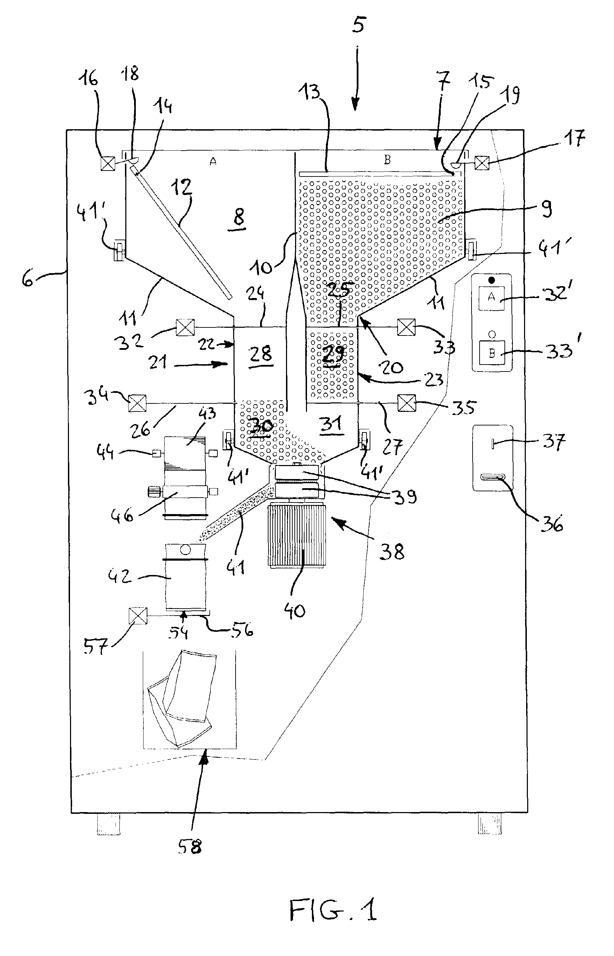

Chacune des chambres séparées 8 et 9 est pourvue d'un adéquat senseur de détection des conditions de remplissage du café en grains dans la même chambre, et dans le présent example tel senseur est constitué par une correspondante paroi plane rectiligne 12 et 13 logée dans la relative chambre et réalisée avec une grandeur légèrement plus petite par rapport à la grandeur de la même chambre, et telles parois planes sont pourvues des charnières dans leur relatives extrémités 14 et 15 les reliants dans la partie supérieure de la respective chambre, en manière de pouvoir se déplacer pour gravité d'une position supérieure (marquée avec la lettre B dans la figure 1), dans laquelle chaque paroi se dispose presque horizontalement, dans la condition de maximum remplissage de café en grains, à une position inférieure (marquée avec la lettre A dans la figure 1) dans laquelle chaque paroi est complètement inclinée vers le bas, dans la condition de complet vidage de café en grains de la respective chambre.

Telles extrémités 14 et 15 des parois planes sont associées avec un correspondant interrupteur électrique 16 et 17, connecté en opération dans le circuit électrique de la machine, et pendant le déplacement de l'une à l'autre position opérative de chaque paroi plane 12 et 13 elles déterminent l'actionnement en positions opératives différents du respectif contact électrique (ne montré pas) des mêmes interrupteurs, à travers un respectif bras mobile 18 et 19 connecté avec lesdites contacts électriques, avec conséquent branchement du circuit électrique de la machine dans la condition de remplissage complet ou partiel des chambres avec le café en grains, ou débranchement de tel circuit électrique dans la condition de vidage des chambres, où le café en grains est complètement tombé vers le bas de la relative chambre.

La partie inférieure 20 du récipient 7 est jointe avec un ultérieur récipient 21, situé au-dessous du même et ayant forme et grandeur correspondant à la même partie inférieure, ledit ultérieur récipient 21 étant subdivisé en chambres séparées rétrécies vers le bas et communiquant avec les chambres séparées du précédent récipient 7, dans le présent cas étant subdivisé dans les chambres 22 et 23 communiquant avec les chambres 8 et 9 situées au-dessus, de sorte que le café en grains venant des chambres 8 et 9 se rassemble dans les relatives chambres 22 et 23, pour être par la suite moulu comme il sera décrit ci-près.

Comme visible particulièrement dans la fig. 1, chacune des chambres 22 et 23 est associée respectivement avec au moins un premier rideau mobile plan rectiligne 24 et 25, situé dans la position supérieure de la respective chambre, au-dessous de la partie inférieure 20 du récipient 7, et avec au moins un respectif deuxième rideau mobile plan rectiligne 26 et 27, situé au-dessous du correspondant premier rideau mobile 24 et 25 et presque dans la position intermédiaire de la relative chambre, de sorte qu'il résulte délimitée respectivement une première part de chambre 28 et 29, qui est utilisée pour le dosage de la quantité de café en grains respectivement sélectionnée, et une deuxième part de chambre 30 et 31 pour la mouture de chaque quantité de café sélectionnée.

Tels premiers et deuxièmes rideaux mobiles 24, 25 et 26, 27 sont réalisés de grandeur légèrement plus petite de celle des correspondant chambres et sont en outre joints à des opportuns moyens de commande, dans le présent cas constitués respectivement par les électro-aimants 32, 33 et 34, 35 connectés dans le circuit électrique de la machine, de telle façon d'être déplacés en coulissant d'une position étendue où chaque rideau mobile pénètre complètement dans la correspondant chambre, en déterminant sa fermeture, à une position retirée où chaque rideau mobile est complètement extrait de la correspondant chambre, en déterminant son ouverture.

De cette façon, en actionnant les différents rideaux dans l'une ou l'autre des leur positions operatives, il est possible d'introduire le café en grains de chacune chambre séparée au début dans la première part de chambre 28 ou 29 située au-dessous et par la suite de cette dernière-ci dans la deuxième part de chambre 30 ou 31 située au-dessous.

En particulier, l'introduction du café en grains de chacune chambre séparée dans la correspondante première part de chambre située au-dessous est effectuée en maintenant le deuxième rideau mobile 26 ou 27 dans la position de fermeture ed en actionnant le relatif premier rideau mobile 24 ou 25 en position d'ouverture, pour une période de temps suffisant à remplir chaque part de chambre avec la quantité de café en grains respectivement désirée, et à la fin de cette période de temps en actionnant de nouveau en fermeture le relatif premier rideau mobile.

Dans ce cas-ci, le dosage du café qui est introduit dans la respective première part de chambre est effectué en utilisant des moyens temporisés de type connu en soi, qui sont connectés dans le circuit électrique de la machine et agissent sur les différents électro-aimants 32, 33 et 34, 35 de commande desdits rideaux mobiles De plus, ce dosage-ci peut être effectué aussi de façons différentes, pour example en employant de senseurs de poids traditionnels (ne montrés pas), disposés à l'intérieur aux premières parts de chambre 28 ou 29 et connectés dans le circuit électrique de la machine, et prévus pour détecter le poids du café en grains introduit dans les mêmes parts de chambre.

De cette façon, le dosage du café est sélectionné préalablement en agissant sur des appropriés boutons-poussoirs des cycles de la machine, connectés dans le circuit électrique de la machine et associés avec les différents types de senseurs de détermination du même dosage, constitués par example par les boutons-poussoirs 32' ou 33' de sélection de deux différents types de café en grains et de commande du déroulement des relatifs cycles séléctionnés.

Naturellement, la séléction du dosage et des relatifs cycles à dérouler peut être effectuée aussi avec des moyens de commande de type différent, par example par l'intermédiaire d'une carte magnétique (ne montrée pas), dans laquelle tous les cycles opératifs et les dosages et les types de café désirés ont étés préalablement mémorisés, lesquels cycles sont séléctionnés en agissant sur des propres boutons-poussoirs de commande, laquelle carte est introduite à travers une correspondante ouverture frontale 36 de la machine, après avoir introduit un éventuel jeton di commande de départ du cycle (ne montré pas) à travers une correspondante ultérieure ouverture frontale 37 de la machine.

Cette solution se prête particulièrement pour l'usage sur des machines en forme de distributeurs automatiques exploitants les mêmes fonctions décrites plus haut.

A son tour, l'introduction de la quantité dosée de café en grains des premières parts de chambre 28 ou 29 aux deuxièmes parts de chambre 30 ou 31 au-dessous, qui sont communiquants entre elles, est effectué en maintenant fermées les relatifs premiers rideaux mobiles 24 ou 25 et en actionnant le relatif deuxième rideau mobile 26 ou 27 dans la position d'ouverture et, dès que chaque première part de chambre a été vidée, en actionnant de nouveau tels deuxièmes rideaux mobiles en position de fermeture, en préparant ainsi telles premières parts de chambre pour des successifs remplissages de quantités dosées de café en grains avec les mêmes modalités décrites plus haut.

Dans la part inférieure des deuxièmes parts de chambre 30 et 31 est fixé au moins un moulin de mouture 38, pourvu de couronnes mobiles 39 pour la mouture du café en grains pénétrant à l'intérieur desdites parts de chambre et qui sont actionnées en rotation par un moteur électrique 40 au-dessous qui fait saillie à l'extérieur des mêmes parts de chambre.

Telles deuxièmes parts de chambre 30 et 31 sont pourvues dans la part inférieure d'un conduit incliné 41 pour le déchargement du café moulu vers le bas et le confectionnement du même dans la façon qui sera décrite plus avant.

Avantageusement, l'ensemble constitué par le récipiént 7 et les premières et deuxièmes parts de chambre est monté amoviblement par rapport au moulin 38, et peut être ainsi démonté de ce dernier-ci pour les opérations de nettoyage de la poudre de café accumulée contre les parois intérieures soit du récipiént, soit des parts de chambre et soit du même moulin, lesquelles opérations sont normalement effectuées manuellement avec la machine hors service et après un certain nombre des cycles opératifs exploités.

Dans l'example représenté, tel ensemble est pourvu des roulettes 41' coulissant dans des guides rectilignes latérales 41" de l'enveloppe de la machine, pour permettre le démontage du même ensemble.

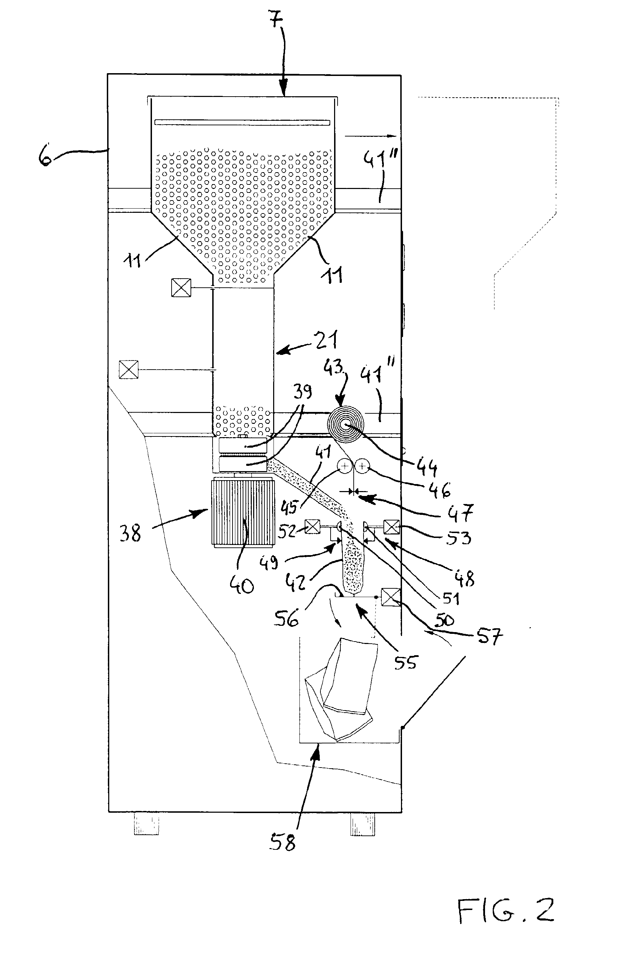

En outre, la présente machine comprend une pluralité de sachets flexibles 42 de propre matériel, dans lesquels le café moulu est introduit comme il serà décrit plus avant, lesquels sachets sont joints réciproquement en forme d'un ruban continu 43, enroulé autour d'un arbre tournant à vide 44 placé dans une position au-dessus et coïncidant par rapport au conduit de déchargement incliné 41, lequel ruban est entraîné par au moins deux rouleaux tournants moteurs 45 et 46 en contact serré contre les deux surfaces plus grandes du même sachet, de sorte que celui-ci soit déplacé lentement vers le bas, pour être ainsi positionné d'abord en correspondance d'un dispositif de fermeture 47 au-dessous, constitué pour example par une machine à souder par points ou une agrafeuse ou moyens pareils, de type trationnel, qui ferme de manière étanche le fond de chaque sachet, et ensuite en correspondance d'un dispositif 48 pour le blocage temporaire de chaque sachet, pour en permettre le remplissage avec le café moulu, ainsi qu'un ultérieur dispositif de fermeture 49 du même type de celui qui vient d'être décrit, qui ferme d'une manière étanche la part supérieure de chaque sachet dès que le remplissage du même a été effectué. En particulier, le dispositif de blocage temporaire 48 est constitué par au moins deux presseurs 50 et 51, placés le long du parcours de déplacement des sachets et au-dessous de la bouche terminale du conduit de déchargement incliné 41 et actionnés par de respectifs moyens de commande 52 et 53 (dans l'example illustré, formés par des électro-aimants connectés dans le circuit électrique de la machine), en même temps d'une position retirée (visible en fig. 2) où les presseurs 50 et 51 sono éloignés entre eux, à une position extraite où les deux presseurs sont approchés entre eux.

Dans le premier cas, alors, dans l'espace compris entre les presseurs 50 et 51 il est passé lentement chaque sachet 42 entraîné par les rouleaux moteurs 45 et 46, de sorte que ces presseurs se disposent contre une respective surface plus grande de chaque sachet, et le sachet est entraîné jusqu'à s'appuyer avec son fond scellé 54 contre une surface de support 55 au-dessous, formée pour example par un étrier mobile 56 articulé dans la machine et actionné par de propres mécanismes de commande (dans l'example, par un électro-aimant 57), et dans cette position les rouleaux tournants 45 et 46 et le sachet sont arrêtés, pour permettre l'introduction du café moulu dans la part supérieure ouverte du même sachet, jusqu'à ce sachet-ci est rempli avec toute la dose préparée de café moulu.

Dans le deuxième cas, au contraire, les presseurs sont déplacés en position approchée, à la fin du remplissage de chaque sachet, où une ultérieure distribution de café à travers le conduit de déchargement incliné 41 est empêchée, et dans cette position les deux surfaces les plus grandes de chaque sachet sont faites correspondre entre elles, pour être ensuite fermées de manière étanche par le dispositif de fermeture 49. Dans cette condition, alors, le sachet ainsi confectionné est laissé tomber vers le bas, en se recueillant dans un récipiént 58 de la machine placé au-dessous, et cette opération est produite en déplaçant l'étrier mobile 56 de la précédente position de fermeture, dans laquelle le sachet était supporté par le même, à une position d'ouverture dans laquelle tel étrier est écarté du sachet en permettant donc la chute du même sachet.

Donc, il résulte évident que la présente machine permet de choisir le type et les doses de café et le déroulement automatique de toutes les opérations pour la mouture et le confectionnement du café dans de récipients, pour la successive utilisation du même café dans les machines de préparation de café communément employées.

En outre, il faut préciser que la machine peut être réalisée aussi avec de composants constructifs de type diffèrent que ceux qui viennent d'être décrits seulement à titre d'example, à condition que la distribution et le confectionnement de café soient effectués toujours avec les mêmes séries d'opérations décrites plus haut, cela sans sortir de la domaine de protection de la présente invention.

## Revendications

1. Machine pour la distribution et le confectionnement de café, comprenant au moins un récipiént du café en grains et de moyens de mouture du café en grains, caractérisée en ce que ledit récipiént (7) est disposé dans la part supérieure de la machine (5) et subdivisé dans une pluralité de chambres séparées (8, 9) contenant respectivement du café en grains de types différents, et est joint dans la part inférieure avec au moins un ultérieur récipiént (21) subdivisé en premières et deuxièmes parts de chambre (28, 29 ; 30, 31), respectivement utilisées pour le dosage du café en grains et pour la mouture du même, lesdites premières parts de chambre (28, 29) étant pourvues de moyens de dosage du café et communiquant dans la part supérieure avec lesdites respectives chambres séparées (8, 9) à travers premiers moyens de commande mobiles (24, 25), et dans la part inférieure avec lesdites deuxièmes parts de chambre (30, 31) à travers deuxièmes moyens de commande mobiles (26, 27), et lesdites deuxièmes parts de chambre (30, 31) contenant lesdits moyens de mouture du café (38) et étant pourvues d'au moins un conduit de déchargement (41) du café moulu, et caractérisée par une pluralité de sachets (42) ou récipiénts pareils pour le café moulu, entraînés par moyens à moteur (45, 46) de telle sorte de être déplacés d'abord près de premiers moyens de scellage (47), où le fond (54) de chaque sachet (42) est scellé de manière étanche, après près moyens de blocage temporaire (48) en position coïncidente avec ledit conduit de déchargement (41), où chaque sachet est arrêté temporairement et rempli avec une dose de café moulu, et à la fin du remplissage sa part supérieure est scellée par deuxièmes moyens de scellage (49), lesdits sachets remplis et scellés étant enfin déplacés vers de moyens de recueil (58).

2. Machine suivant la revendication 1, caractérisée en ce que ledit récipiént (7) est ouvert dans sa part supérieure et inférieure, et est façonné de préférence en forme parallélépipèpe rétrécie ver le bas, dont les parois inférieures (11) sont inclinées vers le bas.

3. Machine suivant la revendication 1, caractérisée en ce que chacune desdites chambres séparées (8, 9) est pourvue de moyens senseurs (12, 13) de détection des conditions de remplissage et vidage du café en grains par rapport aux mêmes chambres, lesdits moyens senseurs (12, 13) coopérant avec respectifs moyens interrupteurs (16, 17) de telle sorte à permettre ou empêcher le fonctionnement de la machine respectivement dans la condition de remplissage ou de vidage.

4. Machine suivant la revendication 3, caractérisée en ce que lesdits moyens senseurs comprennent au moins une correspondente paroi plane rectiligne (12, 13) logée dans la relative chambre et réalisée de grandeur légèrement plus petite par rapport à la grandeur de la même chambre, lesdites parois planes (12, 13) étant pourvues des charnières dans leur relatives extrémités (14, 15) les reliants dans la partie supérieure de la respective chambre, et étant déplaceables pour gravité d'une position supérieure dans laquelle chaque paroi se dispose presque horizontalement, dans la condition de maximum remplissage de café, à une position inférieure dans laquelle chaque paroi est complètement inclinée vers le bas, dans la condition de complet vidage de la respective chambre.

5. Machine suivant la revendication 1, caractérisée en ce que lesdits premiers et deuxièmes moyens de commande mobiles comprennent de respectifs rideaux mobiles (24, 25) et deuxièmes rideaux mobiles (26, 27), réalisés de grandeur légèrement plus petite que celle des correspondents chambres et joints avec correspondents électro-aimants (32, 33 : 34, 35) ou moyens pareils connectés dans le circuit électrique de la machine, lesdits premiers rideaux mobiles (24, 25) et deuxièmes rideaux mobiles (26, 27) étant actionnables d'une position de fermeture à une d'ouverture, où toutes les chambres ne sont pas communiquant ou sont communiquant entre elles, de telle sorte que le café en grains puisse être introduit des relatives chambres séparées (8, 9) dans les correspondentes premières parts de chambre (28, 29), en maintenant fermés lesdits deuxièmes rideaux mobiles (26, 27) et en actionnant en ouverture lesdits premiers rideaux mobiles (24, 25), et tel café en grains puisse être introduit desdites premières parts de chambre (28, 29) en quantités dosées dans les correspondentes deuxièmes parts de chambre (30, 31) en maintenant fermés lesdits premiers rideaux mobiles (24, 25) et en actionnant en ouverture lesdits deuxièmes rideaux mobiles (26, 27).

6. Machine suivant la revendication 5, caractérisée en ce que lesdits moyens de dosage du café comprennent des moyens temporisés branchés dans le circuit électrique de la machine et connectés avec lesdits moyens de commande de sorte de déterminer une fermeture du relatif rideau mobile (24, 25) après une période de temps suffisante pour remplir chaque part de chambre (28, 29) avec la quantité de café en grains respectivement désirée.

7. Machine suivant la revendication 5, caractérisée en ce que lesdits moyens de dosage du café comprennent senseurs de poids de type traditionnel, branchés dans le circuit électrique de la machine et préparés pour détecter le poids du café en grains introduit dans lesdites premières parts de chambre (28, 29).

8. Machine suivant les revendications 6 et 7, caractérisée par moyens sélecteurs (boutons-poussoirs, carte magnétique etc..) associés avec lesdits moyens temporisés ou lesdits senseurs de poids, pour la detérmination du dosage et des différents types de café en grains et la commande du déroulement des cycles respectivement sélectionnés.

9. Machine suivant la revendication 1, caractérisée en ce que ledit récipiént (7) et lesdites premières et deuxièmes parts de chambre (28, 29 : 30, 31) sont montés de manière amovible sur lesdits moyens de mouture (38), pour pouvoir être ainsi démontés de ceux dernières pour leur nettoyage.

10. Machine suivant la revendication 1, caractérisée en ce que lesdits sachets (42) sont joints réciproquement en forme d'un ruban continu (43), enroulé autour d'un arbre tournant à vide (44) placé dans une position au-dessus et coïncidant par rapport à ledit conduit de déchargement (41).

11. Machine suivant la revendication 10, caractérisée en ce que lesdits moyens moteurs comprennent deux rouleaux tournants moteurs (45, 46) en contact serré contre les deux surfaces plus grandes desdits sachets (42), de sorte d'en déterminer le déplacement progressif.

12. Machine suivant la revendication 1, caractérisée en ce que lesdits premiers et deuxièmes moyens de scellage (47, 49) comprennent une machine à souder par points, une agrafeuse ou moyens pareils.

13. Machine suivant la revendication 1, caractérisée en ce que lesdits moyens de blocage temporaire comprennent au moins deux presseurs (50, 51) placés le long du parcours de déplacement desdits sachets (42) et au-dessous de la bouche terminale dudit conduit de déchargement (41), ainsi que actionnés par moyens de commande (électro-aimants 52, 53) connectès dans le circuit électrique de la machine, en même temps d'une position retirée où lesdits presseurs (50, 51) sont éloignés entre eux, pour le passage et le positionnement de chaque sachet (42) dans sa position de remplissage, à une position extraite où lesdits presseurs (50, 51) sont approchés entre eux, pour la fermeture de la part supérieure du même sachet.

14. Machine suivant la revendication 14, caractérisée par au moins une surface de support (55) pour l'appui de chaque sachet (42) pendant son remplissage, et pour laisser parvenir le sachet rempli dans lesdits moyens de recueil (58).
